# EUROPÄISCHE PATENTSCHRIFT

(11) **EP 3 607 408 B1**
(45) Veröffentlichungstag und Bekanntmachung des Hinweises auf die Patenterteilung: **29.12.2021**
(21) Anmeldenummer: 18712079.5
(22) Anmeldetag: 19.03.2018
(51) Int. Cl.: G05D 1/02

(54) **VERFAHREN ZUM BESTIMMEN DER POSITION EINES SPURGEFÜHRTEN MOBILTEILS UND SYSTEM**
METHOD FOR DETERMINING THE POSITION OF A TRACK-GUIDED MOBILE ELEMENT, AND SYSTEM
PROCÉDÉ POUR DÉTERMINER LA POSITION D'UN MOBILE GUIDÉ SUR PISTE, ET SYSTÈME

(30) Priorität: 03.04.2017 DE 102017003208
(43) Veröffentlichungstag der Anmeldung: 12.02.2020
(73) Patentinhaber: SEW-EURODRIVE GmbH & Co. KG, 76646 Bruchsal (DE)
(72) Erfinder: PFAFF, Rainer, 76703 Kraichtal (DE)
(86) Internationale Anmeldenummer: PCT/EP2018/025063
(87) Internationale Veröffentlichungsnummer: WO 2018/184729

(56) Entgegenhaltungen:
- EP-A2- 0 213 939
- WO-A2-01/61271
- US-A- 5 764 014
- US-A1- 2002 165 648
- US-A1- 2007 179 690
- US-A1- 2014 358 331

## Beschreibung

Die Erfindung betrifft ein Verfahren zum Bestimmen der Position eines spurgeführten Mobilteils und ein System.

Es ist allgemein bekannt, dass ein spurgeführtes Mobilteil einer am Boden verlegten Leitung folgt.

Aus der US 2002 /165648 A1 ist als nächstliegender Stand der Technik eine Steuerung der AGV Position bekannt.

Aus der EP 0 213 939 A2 ist eine Steuerung eines Mobilteils bekannt.

Aus der US 2014/358331 A1 ist der Übergang in einen automatischen Steuerungsmodus bei einem Mobilteil bekannt.

Aus der US 2007/179690 A1 ist eine Spurführung eines Mobilteils bekannt.

Aus der US 5 764 014 A ist ein Mobilteil mit Spurführungssensor bekannt.

Aus der WO 01/61271 A2 ist Golfnavigationssystem mit in Übereinstimmung gebrachten Kartierungen bekannt.

Der Erfindung liegt daher die Aufgabe zugrunde, eine verbesserte Positionsbestimmung auszubilden.

Erfindungsgemäß wird die Aufgabe bei dem Verfahren nach den in Anspruch 1 und bei dem System nach den in Anspruch 7 angegebenen Merkmalen gelöst.

Wichtige Merkmale bei dem Verfahren sind im Anspruch 1 definiert.

Von Vorteil ist dabei, dass die durch odometrische Erfassung bestimmte Position mittels der im Speicher hinterlegten Bahnkurve verbesserbar ist. Dabei ist das Mobilteil ein Intralogistisches Fahrzeug, also ein Fahrzeug, welches in einer Fertigungshalle und/oder Lagerhalle eine industriellen Anlage Transportaufgaben ausführt. Da am Boden eine Leitung zur Spurführung verlegt ist, ist das mobilteil mittels der Signale seines Spurführungssensors in einfacher Weise in der Lage, der Leitung zu folgen. Hierzu weist das Mobilteil nicht nur einen Traktionsantrieb auf, sondern auch eine Lenkeinrichtung. Vorzugswiese sind diese beiden Einheiten integriert ausgeführt, indem zwei von jeweils einem Motor angetriebene Räder vorgesehen sind, deren Winkellagenunterschied und/oder Winkelgeschwindigkeitsunterschied die Lenkrichtung steuerbar macht, wobei die Räder gleichzeitig dem Vortrieb des Mobilteils, also der Traktion, dienen.

Die Bestimmung der aktuellen Position ist einfach ausführbar, indem der erfasste Bahnkurvenabschnitt derart gedreht und verschoben wird, dass der Abstand zur hinterlegten Bahnkurve möglichst klein wird.

Erfindungsgemäß wird die Abbildung mittels Drehung und/oder Verschiebung des erfassten Bahnkurvenabschnitts bestimmt. Von Vorteil ist dabei, dass eine lineare Transformation in der Ebene ausführbar ist und somit der Rechenaufwand gering ist.

Bei einer vorteilhaften Ausgestaltung wird die Bahnkurve als Punktemenge gespeichert
und/oder der Bahnkurvenabschnitt wird als Menge erfasster Messwertpunkte gespeichert. Von Vorteil ist dabei, dass eine einfache Ausführung erreichbar ist.

Bei einer vorteilhaften Ausgestaltung ist das Maß die Summe aller Abstandsquadrate der Punkte der Abbildung des erfassten Bahnkurvenabschnitts zur Bahnkurve.
oder das Maß ist die Summe aller Abstandsbeträge der Punkte der Abbildung des Bahnkurvenabschnitts zur Bahnkurve,
oder das Maß ist das Integral entlang der Abbildung des erfassten Bahnkurvenabschnitts über das Quadrat des Abstandes zwischen Abbildung und Bahnkurve,
oder das Maß ist das Integral entlang der Abbildung des erfassten Bahnkurvenabschnitts über das Abstandsquadrat zwischen Abbildung und Bahnkurve. Von Vorteil ist dabei, dass eine einfache Bestimmung des Maßes ausführbar ist und somit eine rechnerische Optimierung bezüglich der Drehung und der Verschiebung, also dreier Variablen, in einfacher Weise ausführbar ist.

Bei einer vorteilhaften Ausgestaltung sind die Bahnkurve und der Bahnkurvenabschnitt in einer zweidimensionalen Mannigfaltigkeit, insbesondere Ebene, insbesondere Verfahrebene, angeordnet,
und/oder dass die Bahnkurve eine ebene Kurve ist. Von Vorteil ist dabei, dass eine Bestimmung schnell und einfach ausführbar ist.

Bei einer vorteilhaften Ausgestaltung ist die Drehachse der Drehung in Richtung der Normalen der Ebene ausgerichtet,
wobei der die Verschiebung definierende Vektor parallel zur Ebene ausgerichtet ist. Von Vorteil ist dabei, dass die Bestimmung einfach ausführbar ist, da nur eine ebene Optimierung auszuführen ist.

Erfindungsgemäß wird zur odometrischen Erfassung der zeitliche Verlauf der Signale von Winkelsensoren ausgewertet,
wobei ein erster der Winkelsensoren zur Erfassung der Winkellage eines ersten Rades und ein zweiter der Winkelsensoren zur Erfassung der Winkellage eines zweiten Rades vorgesehen ist,
wobei erstes und zweites Rad axial voneinander beabstandet sind. Von Vorteil ist dabei, dass der Traktionsantrieb integrierbar ist mit der Lenkvorrichtung des Mobilteils.

Erfindungsgemäß ist der zur Spurführung am Boden einer Anlage verlegte Linienleiter mit einem Wechselstrom beaufschlagt, so dass Energie induktiv vom Linienleiter an eine Sekundärwicklung des Mobilteils übertragbar ist zur Versorgung des Traktionsantriebs des Mobilteils. Von Vorteil ist dabei, dass die Spurführung gleichzeitig zur Energieübertragung verwendbar ist.

Wichtige Merkmale bei dem System sind im Anspruch 7 definiert.

Von Vorteil ist dabei, dass die Traktion und Lenkung integriert ausgeführt sind und kein zusätzlicher Aufwand für die Durchführung der erfindungsgemäßen Bestimmung der aktuellen Position des Mobilteils notwendig ist.

Bei einer vorteilhaften Ausgestaltung weist die Steuerung einen Rechner auf, mit welchem aus dem zeitlichen Verlauf der Signale der Winkelsensoren und der in dem Speicher hinterlegten Bahnkurve die aktuelle Position des Mobilteils bestimmbar ist. Von Vorteil ist dabei, dass das erfindungsgemäße Verfahren in einfacher Weise ausführbar ist.

Die Erfindung wird nun anhand von Abbildungen näher erläutert:
In der Figur 1 ist ein von einem spurgeführten Mobilteil erfasster Bahnkurvenabschnitt 1 dargestellt sowie eine im Mobilteil gespeicherte Bahnkurve 3.
In der Figur 2 ist die Bestimmung der aktuellen Position 4 des Mobilteils durch Bestimmen der Abbildung des erfassten Bahnkurvenabschnitts 1 durch optimiertes Drehen und Verschieben dargestellt.

Wie in den Figuren gezeigt, weist ein Mobilteil eine in einem Speicher des Mobilteils gespeicherte Bahnkurve 3 auf.

Das Mobilteil ist spurgeführt betrieben. Hierzu ist am Boden eine Leitung verlegt, welcher das Mobilteil mittels eine Spurführungssystems des Mobilteils seiner Sensoren folgt. Dabei wird mittels Odometrie die Bewegung des Mobilteils bestimmt. Aus dem mittels Odometrie von einem Startpunkt ausgehend erfassten Bahnkurvenabschnitt 1 wird die aktuelle Position 4 bestimmt.

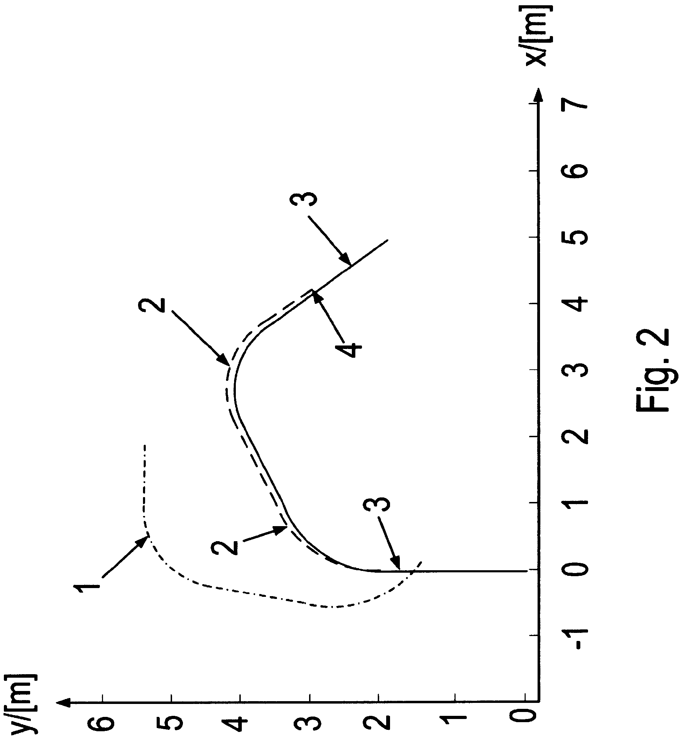

Hierzu wird der erfasste Bahnkurvenabschnitt 1 durch Drehen und Verschieben in eine Abbildung 2 dieses Bahnkurvenabschnitts 1 überführt. Dabei wird die Drehung und die Verschiebung mit einem derartigen Drehwinkel und einem derartigen vorzugsweise ebenen Verschiebevektor ausgeführt, dass die Abbildung 2 mit einem Abschnitt der gespeicherten Bahnkurve 3 möglichst gut in Deckung gebracht ist. Beispielsweise wird hierbei die Summe der Abstandsquadrate aller erfassten Punkte des erfassten Bahnkurvenabschnitts 1 zur gespeicherten Bahnkurve 3 minimiert oder die Summe der Abstandsbeträge aller erfassten Punkte des erfassten Bahnkurvenabschnitts 1 zur gespeicherten Bahnkurve 3 minimiert.

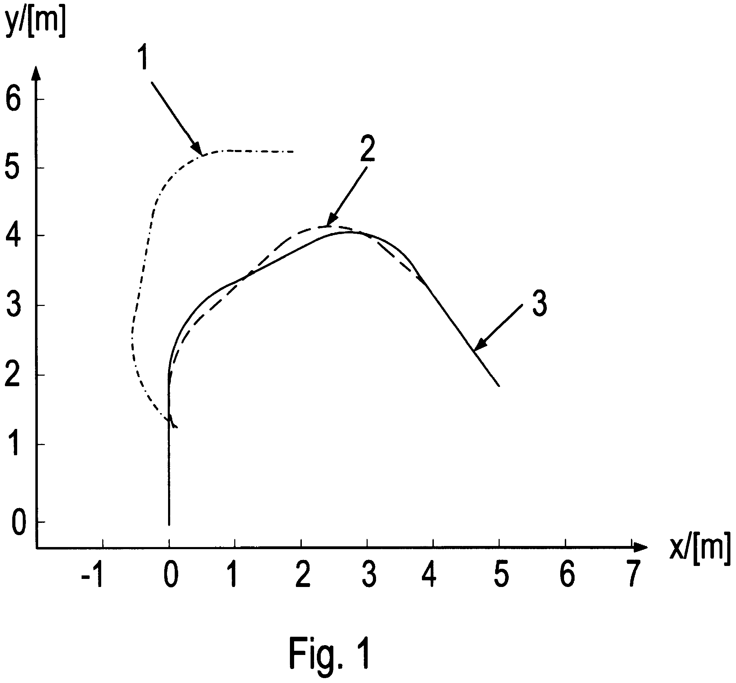

In Figur 1 ist mit ein Abbild des erfassten Bahnkurvenabschnitts 1 dargestellt, welches nicht zwar verschoben und gedreht ist, jedoch nicht optimal.

In der Figur 2 ist die Abbildung 2 optimal gedreht und verschoben. Somit ist die aktuelle Position 4 als letzter Punkt der Abbildung 2 beziehungsweise als zum letzten Punkt der Abbildung 2 nächstliegender Punkt der gespeicherten Bahnkurve 3 bestimmt.

Vorzugsweise ist die am Boden verlegte Leitung als mit einem mittelfrequenten Wechselstrom beaufschlagter langgestreckt verlegter Linienleiter ausgeführt. Somit ist an eine Sekundärwicklung, welche an der Unterseite des Mobilteils angeordnet ist, induktiv Energie während des Abfahrens der Bahnkurve übertragbar.

Der Sekundärwicklung ist eine derartige Kapazität in Reihe oder parallel zugeschaltet, dass die Resonanzfrequenz des so gebildeten Schwingkreises der Frequenz des in den Linienleiter eingeprägten Wechselstroms entspricht. Auf diese Weise ist ein Traktionsantrieb des Mobilteils aus der Sekundärwicklung versorgbar.

Das Mobilteil weist ein erstes Rad auf, das von einem ersten Antrieb angetrieben wird, der einen Winkelsensor zur Erfassung der Winkellage des ersten Rades aufweist.

Das Mobilteil weist auch ein zweites Rad auf, das von einem zweiten Antrieb angetrieben wird, der einen zweiten Winkelsensor zur Erfassung der Winkellage des zweiten Rades aufweist.

Das erste Rad ist vom zweiten Rad in axialer Richtung beabstandet.

Zur odometrischen Erfassung werden also die von den beiden Winkelsensoren erfassten Winkelwerte und die im Speicher des Mobilteils hinterlegten Radaußendurchmesser verwendet. Auf diese Weise ist aus dem zeitlichen Verlauf dieser Winkelwerte der Bahnkurvenabschnitt 1 erfassbar, also bestimmbar.

### Bezugszeichenliste

- 1: erfasster Bahnkurvenabschnitt
- 2: gedrehter und/oder verschobene Abbildung des erfassten Bahnkurvenabschnitts 1
- 3: gespeicherte Bahnkurve
- 4: aktuelle Position

## Patentansprüche

1. Verfahren zum Bestimmen der Position (4) eines spurgeführten Mobilteils,
wobei ein vom Mobilteil zurückgelegter Bahnkurvenabschnitt (1) odometrisch erfasst wird,
wobei zur odometrischen Erfassung der zeitliche Verlauf der Signale von Winkelsensoren ausgewertet wird,
wobei ein erster der Winkelsensoren zur Erfassung der Winkellage eines ersten Rades des Mobilteils und ein zweiter der Winkelsensoren zur Erfassung der Winkellage eines zweiten Rades des Mobilteils vorgesehen ist,
wobei erstes und zweites Rad axial voneinander beabstandet sind,
**dadurch gekennzeichnet, dass**
nachfolgend eine Abbildung des Bahnkurvenabschnitts (1) mittels Drehung und/oder Verschiebung des erfassten Bahnkurvenabschnitts (1) derart bestimmt wird,
- dass ein möglichst kleines Maß an Abweichung zu einer im Mobilteil gespeicherten Bahnkurve (3) erreicht wird
wobei die aktuelle Position (4) des spurgeführten Mobilteils dem Endpunkt der Abbildung entspricht, wobei die aktuelle Position (4) des spurgeführten Mobilteils der Abbildung des zeitlich zuletzt erfassten Punkts des Bahnkurvenabschnitts (1) entspricht,
wobei die aktuelle Richtung, also Fahrrichtung des spurgeführten Mobilteils, der Abbildung der zeitlich zuletzt erfassten Richtung des Bahnkurvenabschnitts (1) entspricht,
wobei der zur Spurführung am Boden einer Anlage verlegte Linienleiter mit einem Wechselstrom beaufschlagt ist, so dass Energie induktiv vom Linienleiter an eine Sekundärwicklung des Mobilteils übertragbar ist zur Versorgung eines Traktionsantriebs des Mobilteils.

2. Verfahren nach Anspruch 1,
**dadurch gekennzeichnet, dass**
die Bahnkurve (3) als Punktemenge gespeichert wird
und/oder dass der Bahnkurvenabschnitt (1) als Menge erfasster Messwertpunkte gespeichert wird.

3. Verfahren nach Anspruch 2,
**dadurch gekennzeichnet, dass**
das Maß die Summe aller Abstandsquadrate der Punkte der Abbildung des erfassten Bahnkurvenabschnitts (1) zur Bahnkurve (3) ist
oder dass das Maß die Summe aller Abstandsbeträge der Punkte der Abbildung des Bahnkurvenabschnitts (1) zur Bahnkurve (3) ist.

4. Verfahren nach Anspruch 1 oder 2,
**dadurch gekennzeichnet, dass**
das Maß das Integral entlang der Abbildung des erfassten Bahnkurvenabschnitts (1) über das Quadrat des Abstandes zwischen Abbildung und Bahnkurve (3) ist
oder dass das Maß das Integral entlang der Abbildung des erfassten Bahnkurvenabschnitts (1) über das Abstandsquadrat zwischen Abbildung und Bahnkurve (3) ist.

5. Verfahren nach mindestens einem der vorangegangenen Ansprüche,
**dadurch gekennzeichnet, dass**
die Bahnkurve (3) und der Bahnkurvenabschnitt (1) in einer zweidimensionalen Mannigfaltigkeit, insbesondere Ebene, insbesondere Verfahrebene, angeordnet sind,
und/oder dass die Bahnkurve (3) eine ebene Kurve ist.

6. Verfahren nach mindestens einem der vorangegangenen Ansprüche,
**dadurch gekennzeichnet, dass**
die Drehachse der Drehung in Richtung der Normalen der den Bahnkurvenabschnitt (1) aufweisenden Ebene ausgerichtet ist,
wobei der die Verschiebung definierende Vektor parallel zur Ebene ausgerichtet ist.

7. System konfiguriert zur Durchführung des Verfahrens nach mindestens einem der vorangegangenen Ansprüche,
**dadurch gekennzeichnet, dass**
das Mobilteil einen Spurführungssensor zur Detektion der seitlichen Abweichung des Mobilteils zu einer am Boden verlegten Linienleiter aufweist,
wobei das Mobilteil ein von einem ersten Elektromotor angetriebenes erstes Rad aufweist, dessen Winkellage mit einem ersten Winkelsensor erfassbar ist,
wobei das Mobilteil ein von einem zweiten Elektromotor angetriebenes zweites Rad aufweist, dessen Winkellage mit einem zweiten Winkelsensor erfassbar ist,
wobei die Motoren von einer Steuerung derart angesteuert werden, dass die Differenz der Winkellagen der beiden Räder abhängig vom Signal des Spurführungssensors steuerbar ist,
wobei die Steuerung einen Speicher aufweist, in welchem die Bahnkurve (3) hinterlegbar oder speicherbar ist,
wobei der zur Spurführung am Boden einer Anlage verlegte Linienleiter mit einem Wechselstrom beaufschlagt ist, so dass Energie induktiv vom Linienleiter an eine Sekundärwicklung des Mobilteils übertragbar ist zur Versorgung eines Traktionsantriebs des Mobilteils.

8. System nach Anspruch 7,
**dadurch gekennzeichnet, dass**
die Steuerung einen Rechner aufweist, mit welchem aus dem zeitlichen Verlauf der Signale der Winkelsensoren und der in dem Speicher hinterlegten Bahnkurve (3) die aktuelle Position (4) des Mobilteils bestimmbar ist.

## Claims

1. Method for determining the position (4) of a track-based mobile component,
a trajectory portion (1) covered by the mobile component being detected odometrically,
the curve over time of the signals of angle sensors being evaluated for the purpose of the odometric detection,
a first of the angle sensors being provided for detecting the angular position of a first wheel of the mobile component, and a second of the angle sensors being provided for detecting the angular position of a second wheel of the mobile component,
the first wheel and the second wheel being axially spaced apart from one another, **characterised in that**
an image of the trajectory portion (1) is then determined by rotating and/or shifting the detected trajectory portion (1) in such a way that
- as small an amount of deviation as possible from a trajectory (3) stored in the mobile component is achieved,
the current position (4) of the track-based mobile component corresponding to the end point of the image, the current position (4) of the track-based mobile component corresponding to the image of the most recently detected point of the trajectory portion (1),
the current direction, i.e. direction of travel, of the track-based mobile component corresponding to the image of the most recently detected direction of the trajectory portion (1),
an alternating current being applied to the track conductor that is installed on the floor of a facility for the purpose of track guidance, in such a way that energy can be transmitted inductively from the track conductor to a secondary winding of the mobile component to power a traction drive of the mobile component.

2. Method according to claim 1,
**characterised in that**
the trajectory (3) is stored as a point set
and/or **in that** the trajectory portion (1) is stored as a set of detected measured-value points.

3. Method according to claim 2,
**characterised in that**
the amount is the sum of all the squared distances of the points in the image of the detected trajectory portion (1) in relation to the trajectory (3)
or **in that** the amount is the sum of all the distance values of the points in the image of the trajectory portion (1) in relation to the trajectory (3).

4. Method according to either claim 1 or claim 2,
**characterised in that**
the amount is the integral along the image of the detected trajectory portion (1) over the square of the distance between the image and the trajectory (3)
or **in that** the amount is the integral along the image of the detected trajectory portion (1) over the squared distance between the image and the trajectory (3).

5. Method according to at least one of the preceding claims,
**characterised in that**
the trajectory (3) and the trajectory portion (1) are arranged in a two-dimensional manifold, in particular a plane, in particular a plane of travel,
and/or **in that** the trajectory (3) is a planar curve.

6. Method according to at least one of the preceding claims,
**characterised in that**
the axis of rotation of the rotation is oriented in the direction of the normal of the plane having the trajectory portion (1),
the vector that defines the shift being oriented in parallel with the plane.

7. System configured for carrying out the method according to at least one of the preceding claims,
**characterised in that**
the mobile component has a track-guidance sensor for detecting the lateral deviation of the mobile component from a track conductor installed on the floor,
the mobile component having a first wheel that is driven by a first electric motor and the angular position of which can be detected by a first angle sensor,
the mobile component having a second wheel that is driven by a second electric motor and the angular position of which can be detected by a second angle sensor,
the motors being actuated by a controller in such a way that the difference between the angular positions of the two wheels can be controlled depending on the signal of the track-guidance sensor,
the controller having a memory in which the trajectory (3) can be deposited or stored,
an alternating current being applied to the track conductor that is installed on the floor of a facility for the purpose of track guidance, in such a way that energy can be transmitted inductively from the track conductor to a secondary winding of the mobile component to power a traction drive of the mobile component.

8. System according to claim 7,
**characterised in that**
the controller has a computer by which the current position (4) of the mobile component can be determined from the curve over time of the signals of the angle sensors and the trajectory (3) stored in the memory.

## Revendications

1. Procédé de détermination de l'emplacement (4) d'une partie mobile à guidage par piste,
un tronçon (1) de courbe de trajectoire, parcouru par ladite partie mobile, étant détecté en mode odométrique,
l'allure temporelle des signaux de capteurs angulaires étant évaluée en vue de la détection odométrique,
sachant qu'un premier capteur, au sein des capteurs angulaires, est prévu pour détecter la position angulaire d'une première roue de la partie mobile et qu'un second capteur, au sein desdits capteurs angulaires, est prévu pour détecter la position angulaire d'une seconde roue de ladite partie mobile,
lesdites première et seconde roues étant distantes l'une de l'autre dans le sens axial,
**caractérisé par le fait que**,
lors d'une phase successive, une image du tronçon (1) de courbe de trajectoire est déterminée, au moyen d'une rotation et/ou d'une translation du tronçon (1) de courbe de trajectoire détecté, de façon
- à obtenir une mesure d'écart la plus faible possible par rapport à une courbe de trajectoire (3) mémorisée dans la partie mobile,
sachant que l'emplacement effectif (4) de la partie mobile à guidage par piste correspond au point extrême de l'image, ledit emplacement effectif (4) de la partie mobile à guidage par piste correspondant alors à l'image du point dudit tronçon (1) de courbe de trajectoire qui est détecté en dernier dans le temps,
la direction effective, c'est-à-dire la direction de déplacement de ladite partie mobile à guidage par piste, correspondant alors à l'image de la direction dudit tronçon (1) de courbe de trajectoire qui est détectée en dernier dans le temps,
sachant que le conducteur de ligne, posé au sol d'une installation en vue du guidage par piste, est sollicité par un courant alternatif de manière que de l'énergie puisse être transmise par induction à un enroulement secondaire de la partie mobile, par ledit conducteur de ligne, en vue de l'alimentation d'un entraînement en traction de ladite partie mobile.

2. Procédé selon la revendication 1,
**caractérisé par le fait que**
la courbe de trajectoire (3) est mémorisée sous la forme d'un ensemble de points ;
et/ou **par le fait que** le tronçon (1) de courbe de trajectoire est mémorisé sous la forme d'un ensemble de points de valeurs mesurées détectés.

3. Procédé selon la revendication 2,
**caractérisé par le fait que**
la mesure est la somme de tous les carrés de distance des points de l'image du tronçon (1) de courbe de trajectoire détecté, par rapport à la courbe de trajectoire (3) ;
ou **par le fait que** ladite mesure est la somme de toutes les valeurs de distance des points de l'image dudit tronçon (1) de courbe de trajectoire, par rapport à ladite courbe de trajectoire (3).

4. Procédé selon la revendication 1 ou 2,
**caractérisé par le fait que**
la mesure est l'intégrale, le long de l'image du tronçon (1) de courbe de trajectoire détecté, sur le carré de la distance comprise entre ladite image et la courbe de trajectoire (3) ;
ou **par le fait que** ladite mesure est l'intégrale, le long de l'image du tronçon (1) de courbe de trajectoire détecté, sur le carré de la distance séparant ladite image et ladite courbe de trajectoire (3).

5. Procédé selon au moins l'une des revendications précédentes,
**caractérisé par le fait que**
la courbe de trajectoire (3) et le tronçon (1) de courbe de trajectoire sont situés dans un ensemble collecteur bidimensionnel, notamment un plan, en particulier un plan de déplacement ;
et/ou **par le fait que** ladite courbe de trajectoire (3) est une courbe plane.

6. Procédé selon au moins l'une des revendications précédentes,
**caractérisé par le fait que**
l'axe de la rotation est orienté dans la direction de la normale au plan comportant le tronçon (1) de courbe de trajectoire,
le vecteur, définissant la translation, étant orienté parallèlement audit plan.

7. Système configuré pour la mise en oeuvre du précédé conforme à au moins l'une des revendications précédentes,
**caractérisé par le fait que**
la partie mobile est munie d'un capteur de guidage par piste, affecté à la détection de l'écart latéral de ladite partie mobile par rapport à un conducteur de ligne posé au sol,
ladite partie mobile étant dotée d'une première roue entraînée par un premier moteur électrique, dont la position angulaire peut être détectée à l'aide d'un premier capteur angulaire,
ladite partie mobile étant pourvue d'une seconde roue entraînée par un second moteur électrique, dont la position angulaire peut être détectée à l'aide d'un second capteur angulaire,
lesdits moteurs étant pilotés par une commande de façon telle que la différence, entre les positions angulaires des deux roues, puisse être commandée en fonction du signal dudit capteur de guidage par piste,
ladite commande étant équipée d'une mémoire dans laquelle la courbe de trajectoire (3) peut être consignée ou mémorisée,
sachant que le conducteur de ligne, posé au sol d'une installation en vue du guidage par piste, est sollicité par un courant alternatif de manière que de l'énergie puisse être transmise par induction à un enroulement secondaire de la partie mobile, par ledit conducteur de ligne, en vue de l'alimentation d'un entraînement en traction de ladite partie mobile.

8. Système selon la revendication 7,
**caractérisé par le fait que**
la commande est équipée d'un calculateur à l'aide duquel l'emplacement effectif (4) de la partie mobile peut être déterminé sur la base de l'allure temporelle des signaux des capteurs angulaires, et de la courbe de trajectoire (3) consignée dans la mémoire.
